# EUROPÄISCHE PATENTSCHRIFT

(11) **EP 2 783 563 B1**
(45) Veröffentlichungstag und Bekanntmachung des Hinweises auf die Patenterteilung: **07.09.2016**
(21) Anmeldenummer: 13001572.0
(22) Anmeldetag: 27.03.2013
(51) Int. Cl.: A01D 34/74

(54) **Arbeitsgerät mit einer verstellbaren Baueinheit**
Work machine with an adjustable assembly
Appareil de travail avec un composant réglable

(43) Veröffentlichungstag der Anmeldung: 01.10.2014
(73) Patentinhaber: Viking GmbH, 6336 Langkampfen (AT)
(72) Erfinder: Schäfer, Frieder, 6330 Kufstein (AT); Klingler, Christoph, 6311 Oberau (AT)
(74) Vertreter: Reinhardt, Annette

(56) Entgegenhaltungen:
- EP-A1- 2 412 220
- WO-A1-03/103375
- DE-A1- 1 934 442
- DE-U1- 8 815 674
- DE-U1-202010 008 414
- GB-A- 1 010 481

## Beschreibung

Die Erfindung betrifft ein Arbeitsgerät mit einer verstellbar gehaltenen Baueinheit der im Oberbegriff des Anspruchs 1 angegebenen Gattung.

Aus der DE 1 934 442 A1 ist ein Arbeitsgerät, nämlich ein selbstfahrender Rasenmäher bekannt, bei dem der Antriebsmotor zusammen mit dem vom Antriebsmotor angetriebenen Messer höhenverstellbar angeordnet ist. Hierzu ist eine Schraube oder Spindel vorgesehen, die in einem zugehörigen Ständer verdrehbar angeordnet ist. Der Weg, den das Messer zurücklegt, entspricht für jede Umdrehung der Spindel der Ganghöhe des Gewindes. Bei einem großen gewünschten Verstellweg des Messers ist die Bedienung dadurch vergleichsweise zeitaufwendig.

**Die** DE 20 2010 008 414 U1 **zeigt einen selbstfahrenden Rasenmäher mit einer Schnitthöhenverstellung, bei welcher sowohl der Antriebsmotor als auch das Messer höhenverstellbar angeordnet sind. Hierzu ist ein elektrisch angetriebener Verstellmotor vorgesehen.**

Der Erfindung liegt die Aufgabe zugrunde, ein Arbeitsgerät der gattungsgemäßen Art zu schaffen, bei dem eine einfache und schnelle Einstellung der Position der Baueinheit möglich ist.

Diese Aufgabe wird durch ein Arbeitsgerät mit den Merkmalen des Anspruchs 1 gelöst.

Dadurch, dass das Stellelement über eine Getriebeverbindung mit dem Bedienelement in Wirkverbindung steht, kann eine zweckmäßige Übersetzung der Stellbewegung des Bedienelements zur Stellbewegung der Baueinheit erreicht werden. Über die Führungseinrichtung kann eine geeignete Umwandlung der Drehbewegung des Stellelements in eine Bewegung der Baueinheit in Richtung der ersten Drehachse erreicht werden. Die Führungseinrichtung kann dabei so ausgelegt werden, dass sich eine leichtgängige Verstellung ergibt und eine Selbsthemmung vermieden wird, da aufgrund der Getriebeverbindung die Drehbewegung des Stellelements in geeigneter Weise angepasst werden kann.

Die erste Drehachse, um die das Werkzeug rotierend angetrieben ist, und die zweite Drehachse, um die das Bedienelement drehbar ist, können zusammenfallen oder einen Abstand zueinander aufweisen. Vorteilhaft sind die erste und die zweite Drehachse parallel zueinander angeordnet. Auch eine winklige Anordnung der ersten und der zweiten Drehachsen zueinander kann jedoch vorteilhaft sein.

Vorteilhaft wird das Bedienelement für eine Verstellung der Baueinheit zwischen einer ersten und einer zweite Endstellung um etwas weniger als eine Umdrehung gedreht. Vorteilhaft ist jeder Position des Bedienelements eine Position der Baueinheit zugeordnet. Dadurch ist eine Kennzeichnung oder Beschriftung des Bedienelements möglich, die für jede Position des Bedienelements eine Position der Baueinheit angibt. Dadurch wird eine einfache Bedienung ermöglicht. Vorteilhaft verstellt sich das Stellelement zwischen der ersten und der zweiten Endstellung der Baueinheit um deutlich weniger als eine Umdrehung, vorteilhaft um etwa eine drittel Umdrehung bis eine fünftel Umdrehung.

**D**as Bedienelement **besitzt** eine unbetätigte Position und eine Einstellposition. In der unbetätigten Position ist das Bedienelement mit dem Gehäuse des Arbeitsgeräts vorteilhaft drehfest verbunden. In der unbetätigten Position des Bedienelements ist die Einstellvorrichtung dadurch über die drehfeste Verbindung des Bedienelements mit dem Gehäuse gesperrt, so dass eine Verstellung der Position der Baueinheit vermieden ist. Über die drehfeste Verbindung ist die Position der Baueinheit gegenüber dem Gehäuse gesichert. In der Einstellposition ist das Bedienelement vorteilhaft gegenüber dem Gehäuse drehbar, so dass die Position der Baueinheit einstellbar ist. Eine einfache, intuitive Bedienung ergibt sich, wenn das Bedienelement aus der unbetätigten Position in Längsrichtung der zweiten Drehachse in die Einstellposition verstellbar ist. Die Einstellung der Position der Baueinheit, die beispielsweise zur Einstellung der Schnitthöhe eines Rasenmähers dienen kann, erfolgt damit durch Drücken und Drehen des Bedienelements.

Die drehfeste Verbindung ist vorteilhaft eine formschlüssige Verbindung. Dadurch wird eine sichere Fixierung der Baueinheit in jeder eingestellten Position erreicht. Vorteilhaft ist zur drehfesten Verbindung des Bedienelements mit dem Gehäuse eine erste Verzahnung vorgesehen. Eine Verzahnung ermöglicht eine formschlüssige Fixierung des Bedienelements in einer Vielzahl von möglichen Drehlagen. Dadurch wird eine genaue Einstellung der Position der Baueinheit und die Fixierung der Baueinheit in einer Vielzahl unterschiedlicher Stellungen ermöglicht. Ein erster Verzahnungspartner ist vorteilhaft mit dem Bedienelement und ein zweiter Verzahnungspartner mit dem Gehäuse verbunden. In der Einstellposition sind die beiden Verzahnungspartner vorteilhaft außer Eingriff, so dass das Bedienelement gegenüber dem Gehäuse drehbar ist. Vorteilhaft ist mit dem Bedienelement eine Außenverzahnung und mit dem Gehäuse eine Innenverzahnung verbunden. Die Außenverzahnung kann an einer Welle ausgebildet sein, die in einer entsprechenden Aufnahme des Gehäuses gehalten ist. Dadurch ist auf einfache Weise eine Drehlagerung des Bedienelements herstellbar. Auch eine andere Gestaltung der drehfesten Verbindung, insbesondere eine reibschlüssige Verbindung, kann jedoch vorteilhaft sein.

**D**as Bedienelement **ist** in Richtung auf die unbetätigte Position gefedert gelagert. Dadurch wird das Bedienelement beim Loslassen automatisch in die unbetätigte Position zurückgestellt und drehfest mit dem Gehäuse verbunden, so dass die Baueinheit gegenüber dem Gehäuse fixiert ist. Ein einfacher Aufbau ergibt sich, wenn das Bedienelement drehfest mit einer Hülse verbunden ist, die drehbar und in Längsrichtung der zweiten Drehachse verschiebbar im Gehäuse gelagert ist. Um das Bedienelement in Richtung auf seine unbetätigte Position zu federn, ist vorgesehen, dass in der Hülse eine Feder angeordnet ist. Durch die Anordnung in der Hülse ist die Feder vor Verschmutzungen geschützt, und es ergibt sich ein einfacher, platzsparender Aufbau. Die Feder stützt sich vorteilhaft mit einem Ende an einem Absatz der Hülse und mit dem anderen Ende am Gehäuse ab.

Das Bedienelement ist mit der Hülse vorteilhaft über eine lösbare Verbindung verbunden. Dadurch kann das Bedienelement von der Hülse abgenommen werden. Die lösbare Verbindung ist vorteilhaft so ausgelegt, dass die zum Lösen der Verbindung benötigte Kraft kleiner als die Gewichtskraft des Arbeitsgeräts ist. Dadurch wird verhindert, dass das Arbeitsgerät an dem Bedienelement hochgehoben werden kann. Versucht der Bediener, das Arbeitsgerät am Bedienelement hochzuheben, so löst sich das Bedienelement von der Hülse.

Die Getriebeverbindung ist vorteilhaft ein einstufiges Untersetzungsgetriebe. Aufgrund der Einstufigkeit ergibt sich ein einfacher Aufbau. Dadurch, dass das Getriebe ein Untersetzungsgetriebe ist, ist der Drehwinkel, um den sich das Stellelement dreht, kleiner als ein zugeordneter Drehwinkel des Bedienelements. Dadurch ist zum einen eine feinfühlige Einstellung der Position der Baueinheit möglich und zum anderen kann eine Selbsthemmung an der Führungseinrichtung vermieden werden. Die Reibkräfte können gering gehalten werden, so dass sich eine einfache Bedienung mit geringem Kraftaufwand ergibt.

Das Bedienelement ist vorteilhaft drehfest mit einem Ritzel verbunden, wobei das Ritzel das Eingangszahnrad der Getriebeverbindung bildet. Insbesondere ist das Ritzel an der mit dem Bedienelement drehfest verbundenen Hülse ausgebildet. Das Stellelement besitzt vorteilhaft eine zweite Verzahnung, die die Ausgangsverzahnung der Getriebeverbindung bildet. Die erste und die zweite Verzahnung wirken vorteilhaft zusammen. Um eine Endstellung der Baueinheit festzulegen, ist vorgesehen, dass die zweite Verzahnung mindestens einen Anschlag besitzt. Der mindestens eine Anschlag an der Getriebeverbindung verhindert ein weiteres Verstellen des Stellelements über die Endstellung hinaus. Gleichzeitig sind am Gehäuse selbst keine Anschläge oder dgl. notwendig, wodurch sich ein einfacher Aufbau ergibt. Ist das Arbeitsgerät ein Rasenmäher und dient die Einstellvorrichtung zur Einstellung der Schnitthöhe, so begrenzt der Anschlag vorteilhaft die untere Endstellung der Baueinheit.

Vorteilhaft umfasst die Führungseinrichtung mindestens eine wendelförmig um die erste Drehachse verlaufende Schrägführung. Über eine Schrägführung lässt sich auf einfache Weise eine Umwandlung der Drehbewegung des Stellelements in eine lineare Bewegung der Baueinheit umwandeln. Vorteilhaft ist die Baueinheit über eine Linearführung drehfest und in Längsrichtung der ersten Drehachse beweglich gegenüber dem Gehäuse des Arbeitsgeräts gehalten.

Ein einfacher Aufbau ergibt sich, wenn die Baueinheit einen Aufnahmetopf umfasst, in dem der Antriebsmotor angeordnet ist. Der Antriebsmotor kann dabei teilweise oder vollständig in dem Aufnahmetopf angeordnet sein. Der Aufnahmetopf weist vorteilhaft einen Teil der Linearführung und mindestens eine erste Schrägführung auf.

Vorteilhaft besitzt das Stellelement einen ringförmigen Abschnitt, der den Aufnahmetopf umgibt. Der ringförmige Abschnitt lagert das Stellelement am Aufnahmetopf. Dadurch ergibt sich ein einfacher und stabiler Aufbau. Der ringförmige Abschnitt besitzt vorteilhaft mindestens eine zweite Schrägführung, die mit der ersten Schrägführung des Aufnahmetopfs zusammenwirkt. Eine sichere Führung wird erreicht, wenn mindestens drei erste Schrägführungen und mindestens drei zweite Schrägführungen vorgesehen sind, die gleichmäßig am Umfang des Aufnahmetopfs verteilt angeordnet sind. Dadurch kann ein Verkippen oder Verkanten des Stellelements gegenüber dem Aufnahmetopf vermieden werden.

Die Baueinheit umfasst vorteilhaft ein Mähdeck des Arbeitsgeräts, wobei das Mähdeck das Werkzeug mindestens teilweise abdeckt. Vorteilhaft besitzt das Mähdeck eine Seitenwand, die das Werkzeug an seinem Umfang mindestens teilweise abdeckt. Die Seitenwand ist vorteilhaft an der in Fahrtrichtung vorne liegenden Seite mit einer Eintrittsöffnung versehen. Durch die Eintrittsöffnung kann Schnittgut, vorzugsweise Gras, unter das Mähdeck gelangen, ohne umgebogen zu werden. Dadurch ergibt sich ein gutes Schnittergebnis. Die Eintrittsöffnung weist vorteilhaft Rippen auf, die zum einen das Schnittgut aufrichten und zum anderen ein Eingreifen in die Eintrittsöffnung oder ein Herausschleudern von Material aus dem Bereich unter dem Mähdeck nach außen vermeiden.

Die Seitenwand des Mähdecks ist vorteilhaft um einen Winkel von mehr als 100°, insbesondere um einen Winkel von 125° bis 155° gegenüber dem Dach des Mähdecks nach außen geneigt. Dadurch kann Schnittgut, das sich an der Seitenwand anlagert, von selbst nach unten abfallen. Die Verschmutzungsneigung des Mähdecks wird dadurch verringert. Die Seitenwand besitzt vorteilhaft einen unteren geraden Abschnitt, der senkrecht zum Dach verläuft. Die Breite des geraden Abschnitts beträgt vorteilhaft mindestens 5 mm, insbesondere 5 mm bis 10 mm. Der gerade Abschnitt verhindert, dass Fremdkörper nach außen geschleudert werden. Das Messer besitzt vorteilhaft einen senkrecht zur Drehachse gemessenen Abstand zu dem Mähdeck, insbesondere zu dem geraden Abschnitt des Mähdecks, der etwa 10 mm bis etwa 25 mm beträgt.

Ein Ausführungsbeispiel der Erfindung wird im Folgenden anhand der Zeichnung erläutert. Es zeigen:
- Fig. 1: eine schematische Darstellung eines Rasenmähers,
- Fig. 2: die Einstellvorrichtung des Arbeitsgeräts aus Fig. 1 in vergrößerter Schnittdarstellung,
- Fig. 3 und Fig. 4: perspektivische Darstellungen des Bedienelements der Einstellvorrichtung aus Fig. 2,
- Fig. 5: eine perspektivische Darstellung einer Hülse der Einstellvorrichtung aus Fig. 2,
- Fig. 6: eine ausschnittsweise Darstellung des Bereichs der oberen Lagerung der Hülse der Einstellvorrichtung aus Fig. 2 im Gehäuse,
- Fig. 7: eine perspektivische Darstellung der Einstellvorrichtung aus Fig. 2,
- Fig. 8: einen Schnitt durch die Einstellvorrichtung aus Fig. 2,
- Fig. 9: eine perspektivische Darstellung des Stellelements der Einstellvorrichtung aus Fig. 2,
- Fig. 10: eine perspektivische Darstellung des Aufnahmetopfs der Einstellvorrichtung aus Fig. 2,
- Fig. 11: eine perspektivische Darstellung des Gehäuses des Rasenmähers im Bereich der Linearführung,
- Fig. 12 und Fig. 13: perspektivische Darstellungen des Mähdecks des Rasenmähers,
- Fig. 14: eine Seitenansicht des Mähdecks aus den Figuren 12 und 13,
- Fig. 15: einen Schnitt durch das Mähdeck aus den Figuren 12 bis 14.

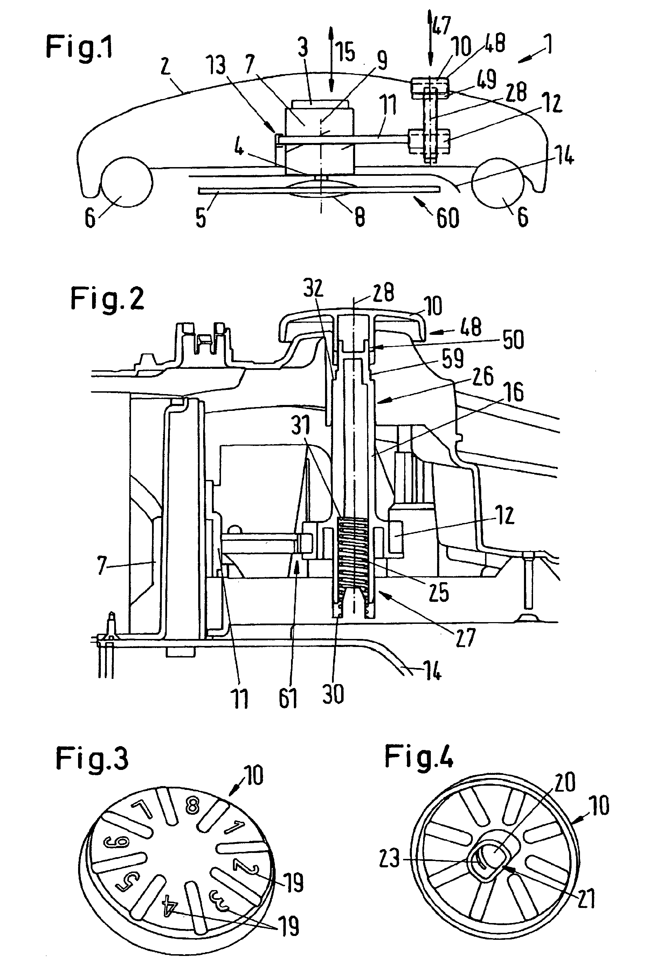

Fig. 1 zeigt als Ausführungsbeispiel für ein Arbeitsgerät einen Rasenmäher 1. Der Rasenmäher 1 ist als selbstfahrender Rasenmäher ausgebildet. Der Rasenmäher 1 kann jedoch auch von einem Bediener über den Boden geschoben werden und hierzu einen oder mehrere Griffe besitzen. Der Rasenmäher 1 besitzt ein Gehäuse 2, in dem ein Antriebsmotor 3 angeordnet ist. Der Antriebsmotor 3 treibt ein Werkzeug, nämlich ein Messer 5 um eine erste Drehachse 9 rotierend an. Hierzu ist das Messer 5 mit einer Befestigungseinrichtung 8 drehfest mit der Antriebswelle 4 des Antriebsmotors 3 verbunden. Der Antriebsmotor 3 ist in einem Aufnahmetopf 7 angeordnet. Der Aufnahmetopf 7 bildet mit dem Antriebsmotor 3, dem an der Antriebswelle 4 festgelegten Messer 5 sowie einem Mähdeck 14, das das Messer 5 an seinem Umfang teilweise abdeckt, eine Baueinheit 60. Die Position der Baueinheit 60 ist im Gehäuse 2 in Längsrichtung der ersten Drehachse 9, also in Richtung des Doppelpfeils 15, verstellbar. Dadurch kann die Schnitthöhe des Messers 5 eingestellt werden. Der Rasenmäher 1 besitzt mehrere Räder 6, die am Gehäuse 2 gelagert sind und mit denen der Rasenmäher 1 sich über den Boden bewegt. Über die Verstellung der Lage der Baueinheit 60 gegenüber dem Gehäuse 2 wird die Position des Messers 5 relativ zu den Rädern 6 in Richtung der ersten Drehachse 9 verstellt. Die erste Drehachse 9 ist dabei in üblicher Abstellposition des Rasenmähers 1 auf einer ebenen Fläche etwa senkrecht ausgerichtet.

Zur Verstellung der Position der Baueinheit 60 besitzt der Rasenmäher 1 eine Einstellvorrichtung, die ein Bedienelement 10, ein Ritzel 12 und ein Stellelement 11 umfasst. Das Stellelement 11 ist über eine Axialsicherung 13 in Richtung der ersten Drehachse 9 gehalten. Das Stellelement 11 ist um die erste Drehachse 9 drehbar, kann sich aber in Längsrichtung der ersten Drehachse 9 nicht gegenüber dem Gehäuse 2 bewegen. Eine Drehung des Stellelements 11 um die erste Drehachse 9 bewirkt eine Bewegung des Aufnahmetopfs 7 gegenüber dem Gehäuse 2 in Richtung der ersten Drehachse 9, wie im Folgenden noch näher beschrieben wird.

Zur Verstellung der Schnitthöhe wird das Bedienelement 10 aus der in Fig. 1 mit durchgezogener Linie gezeichneten unbetätigten Position 48 in Richtung des Pfeils 47 in die mit gestrichelter Linie gezeichnete Einstellposition 49 verstellt. In der unbetätigten Position 48 ist das Bedienelement 10 drehfest mit dem Gehäuse 2 verbunden. In der Einstellposition 49 kann das Bedienelement 10 um eine zweite Drehachse 28 gedreht werden. Dabei dreht sich das Ritzel 12, das mit dem Stellelement 11 kämmt.

Fig. 2 zeigt die Gestaltung der Einstellvorrichtung im Einzelnen. In der in Fig. 2 gezeigten unbetätigten Position 48 des Bedienelements 10 ist das Bedienelement 10 über eine erste Verzahnung 59 drehfest mit dem Gehäuse 2 verbunden. Das Bedienelement 10 ist über eine lösbare Verbindung 50 an einer Hülse 16 angeordnet, die an einer oberen Lagerung 26 und einer unteren Lagerung 27 um die zweite Drehachse 28 drehbar am Gehäuse 2 gelagert ist. Die Lagerungen 26 und 27 sind jeweils als Aufnahmen im Gehäuse 2 ausgebildet. Die obere Lagerung 26 ist dabei die dem Bedienelement 10 zugewandte Lagerung, und die untere Lagerung 27 ist die dem Bedienelement 10 abgewandte Lagerung. Wie Fig. 2 auch zeigt, ist die Hülse 16 hohl ausgebildet. Im Inneren der Hülse 16 ist eine Feder 25 angeordnet, die als Schraubendruckfeder ausgebildet ist und das Bedienelement 10 mit der Hülse 16 in Richtung auf die unbetätigte Position 48 vorspannt.

Die Feder 25 stützt sich mit einem Ende an einem in der Hülse 16 ausgebildeten Absatz 31 ab und mit ihrem zweiten Ende an einem Boden 30 der unteren Lagerung 27. Die Hülse 16 besitzt zum Boden 30 einen Abstand, so dass die Hülse 16 in Längsrichtung der zweiten Drehachse 28 in Richtung zum Boden 30 verschoben werden kann. Wie Fig. 2 auch zeigt, bildet das Ritzel 12 mit dem Stellelement 11 eine Getriebeverbindung 61, über die das Bedienelement 10 auf das Stellelement 11 wirkt.

Die Figuren 3 und 4 zeigen das Bedienelement 10 im Einzelnen. Das Bedienelement 10 ist an seiner nach außen weisenden Oberseite mit einer Beschriftung 19 versehen, die insgesamt acht Stufen für Höheneinstellungen vorgibt. Es kann vorgesehen sein, dass das Bedienelement 10 in Zwischenstellungen angeordnet werden kann. An seiner der Hülse 16 zugewandten Unterseite besitzt das Bedienelement 10 eine Aufnahme 20, die an einer Seite eine Abflachung 21 zur drehfesten Verbindung mit der Hülse 16 besitzt. Wie Fig. 4 auch zeigt, besitzt die Aufnahme 20 an ihrem Innenumfang mindestens eine Rastvertiefung 23.

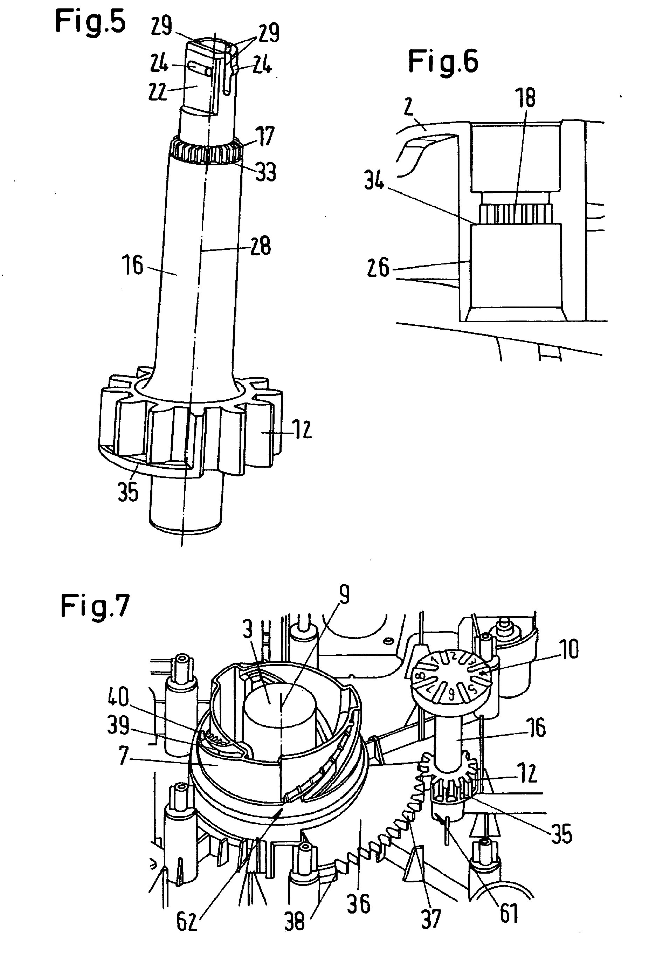

Fig. 5 zeigt die Hülse 16 im Einzelnen. Die Hülse 16 besitzt an ihrem in Fig. 5 oben dargestellten, in der Aufnahme 20 des Bedienelements 10 anzuordnenden Abschnitt eine Abflachung 22. Die Hülse 16 ist in diesem Bereich mit drei Schlitzen 29 versehen, so dass die zwischen den Schlitzen 29 angeordneten Abschnitte der Hülse 16 nach innen federn können. Die Hülse 16 besitzt Rasterhöhungen 24, die mit mindestens einer, insbesondere drei Rastvertiefungen 23 zusammenwirken. Die Rastvertiefungen 23 und Rasterhöhungen 24 bilden eine lösbare Verbindung 50 (Fig. 2), die die Hülse 16 fest, aber lösbar mit dem Bedienelement 10 verbinden. Die Verbindung 50 ist dabei im Ausführungsbeispiel so ausgelegt, dass bei Überschreiten einer konstruktiv vorgegebenen Kraft die durch die Schlitze 29 getrennten Abschnitte der Hülse 16 nach innen verformt werden und die Rasterhöhungen 24 aus den Rastvertiefungen 23 gelangen. Dadurch löst sich die Verbindung 50. Die Verbindung 50 ist vorteilhaft so ausgelegt, dass zum Lösen der Verbindung 50 eine Kraft benötigt wird, die kleiner als die Gewichtskraft des Rasenmähers 1 ist. Dadurch löst sich das Bedienelement 10 von der Hülse 16, wenn der Bediener versucht, den Rasenmäher 1 am Bedienelement 10 hochzuheben. Wie Fig. 5 auch zeigt, besitzt die Hülse 16 eine Außenverzahnung 17, die einen Teil der ersten Verzahnung 59 (Fig. 2) bildet.

Wie Fig. 6 zeigt, ist im Gehäuse 2 eine Innenverzahnung 18 ausgebildet, die mit der Außenverzahnung 17 zusammenwirkt. Wie die Figuren 5 und 6 zeigen, besitzen die Verzahnungen 17 und 18 eine Vielzahl von Zähnen, so dass die Hülse 16 mit dem Bedienelement 10 auch in Zwischenstellungen zwischen den durch die Beschriftung 19 vorgegebenen Positionen fixiert werden kann. Benachbart zur Innenverzahnung 18 besitzt das Gehäuse 2 einen Absatz 34. Am Absatz 34 liegt in unbetätigter Position des Bedienelements 10 ein Absatz 33 der Hülse 16 an (Fig. 5). Die Hülse 16 wird von der Feder 25 (Fig. 2) gegen den Absatz 34 gedrückt und dadurch in der unbetätigten Position 48 gehalten. Der Absatz 33 bildet mit dem Absatz 34 einen in Fig. 2 gezeigten Anschlag 32 für die Hülse 16.

Fig. 5 zeigt benachbart zum Ritzel 12 an der dem Bedienelement 10 abgewandten, dem Messer 5 zugewandten Seite eine sich senkrecht zur zweiten Drehachse 28 erstreckende Wand 35. Wie Fig. 7 zeigt, liegt der äußere Bereich des Stellelements 11, an dem eine zweite Verzahnung 37 ausgebildet ist, auf dem Rand 35 auf. Der Rand 35 hält damit das Stellelement 11 und verhindert ein Verkippen des Stellelements 11 gegenüber der ersten Drehachse 9 (Fig. 1).

Wie Fig. 7 zeigt, bildet das Ritzel 12 mit der zweiten Verzahnung 37 die Getriebeverbindung 61. Wie Fig. 7 auch zeigt, ist an einem Ende der zweiten Verzahnung 37, die der untersten Position des Aufnahmetopfs 7 zugeordnet ist, ein Anschlag 38 ausgebildet, der ein weiteres Verstellen des Bedienelements 10 verhindert. Der Anschlag 38 legt die unterste Position des Aufnahmetopfs 7 fest. Es können auch mehrere Anschläge 38 an der zweiten Verzahnung 37 ausgebildet sein, beispielsweise, um bei Beschädigung eines Anschlags 38 dennoch die Endlage des Bedienelements 10 festzulegen.

Fig. 7 zeigt auch eine Führungseinrichtung 62, die zwischen dem Stellelement 11 und dem Aufnahmetopf 7 wirkt, und die die Drehbewegung des Stellelements 11 in eine axiale Bewegung des Aufnahmetopfs 7 umwandelt. Die Führungseinrichtung 62 besitzt insgesamt drei erste Schrägführungen 39, die am Aufnahmetopf 7 ausgebildet sind. An den Schrägführungen 39, die als wendelförmig um die erste Drehachse 9 verlaufende Stege ausgebildet sind, sind am Stellelement 11 angeordnete zweite Schrägführungen 40 geführt. Am Stellelement 11 sind drei zweite Schrägführungen 40 vorgesehen. Die Anzahl der ersten Schrägführungen 39 entspricht vorteilhaft der Anzahl der zweiten Schrägführungen 40. Die ersten Schrägführungen 39 liegen auf den zweiten Schrägführungen 40 auf. Die ersten Schrägführungen 39 können auch als Nuten ausgebildet sein, in die die zweiten Schrägführungen 40 eingreifen. Es kann auch vorgesehen sein, dass die ersten Schrägführungen 39 am Stellelement 11 und die zweiten Schrägführungen 40 am Aufnahmetopf 7 angeordnet sind. Wie Fig. 7 auch zeigt, sind die Schrägführungen 39 und 40 steil ausgerichtet. Der Winkel, den die Schrägführungen 39, 40 in Seitenansicht mit der Drehachse 9 einschließen, kann beispielsweise von etwa 30° bis etwa 60° betragen. Dadurch wird eine Selbsthemmung zwischen den Schrägführungen 39 und den Schrägführungen 40 vermieden.

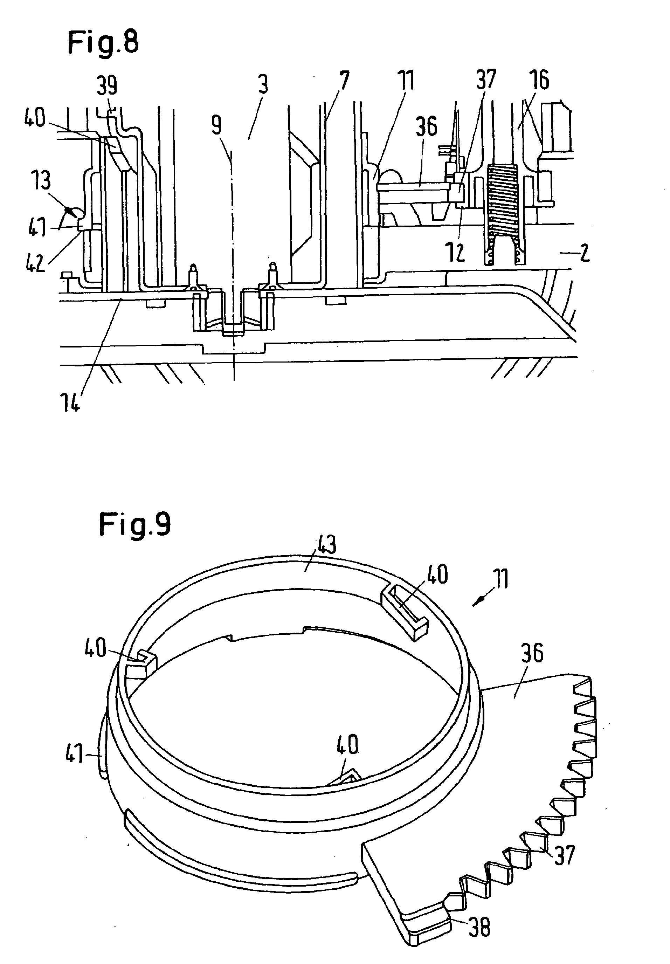

Fig. 8 zeigt die Anordnung der Schrägführungen 39 und 40. Außerdem ist die Axialsicherung 13 gezeigt. Wie Fig. 8 zeigt, wird die Axialsicherung durch einen Absatz 41 gebildet, der am Stellelement 11 an der der zweiten Verzahnung 37 gegenüberliegenden Seite angeordnet ist und der in eine Nut 42 am Gehäuse 2 eingreift.

Wie Fig. 9 zeigt, besitzt das Stellelement 11 einen ringförmigen Abschnitt 43, der, wie Fig. 8 zeigt, den Aufnahmetopf 7 umgibt. An dem ringförmigen Abschnitt 43 ist eine Teilscheibe 36 festgelegt, die sich senkrecht zur ersten Drehachse 9 (Fig. 8) nach außen erstreckt. Am Außenumfang der Teilscheibe 36 ist die zweite Verzahnung 37 ausgebildet. In Fig. 9 sind außerdem die drei zweiten Schrägführungen 40 gezeigt. Die zweiten Schrägführungen 40 sind gleichmäßig am Innenumfang des ringförmigen Abschnitts 43 angeordnet und als nach innen ragende kurze Gewindeabschnitte mit vorteilhaft etwa rechteckigem Querschnitt ausgebildet. Die zweiten Schrägführungen 40 können auch als Bolzen oder dgl. ausgeführt sein, auf denen die ersten Schrägführungen 39 aufliegen.

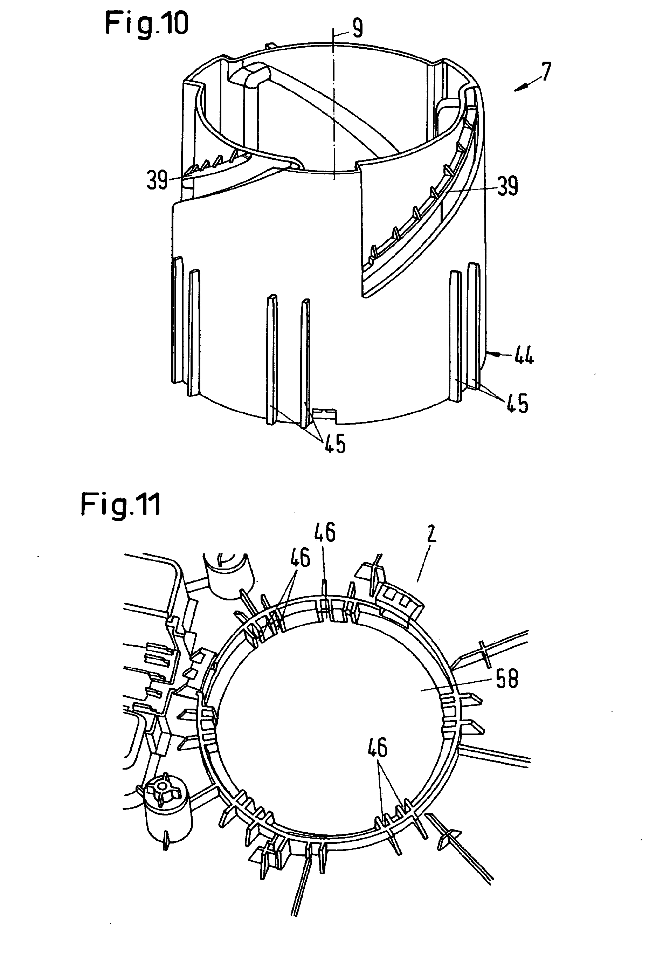

Wie Fig. 10 zeigt, erstrecken sich die zweiten Schrägführungen 40 jeweils über einen deutlich größeren Umfangswinkel als die ersten Schrägführungen 39. Am Außenumfang des Aufnahmetopfs 7 sind in dem dem Mähdeck 14 benachbart liegenden Bereich parallel zur Drehachse 9 verlaufende Längsrippen 45 angeordnet, die Teil einer Linearführung 44 für den Aufnahmetopf 7 bilden. Wie Fig. 11 zeigt, besitzt das Gehäuse 2 eine Öffnung 58, durch die der Aufnahmetopf 7 ragt. Am Außenumfang der Öffnung 58 sind eine Vielzahl von Nuten 46 ausgebildet, in die die Längsrippen 45 ragen und die mit den Längsrippen 45 die Linearführung 44 bilden. Die Linearführung 44 bewirkt die drehfeste Verbindung des Aufnahmetopfs 7 mit dem Gehäuse 2 und erlaubt eine Verstellung des Aufnahmetopfs 7 gegenüber dem Gehäuse 2 in Längsrichtung der ersten Drehachse 9.

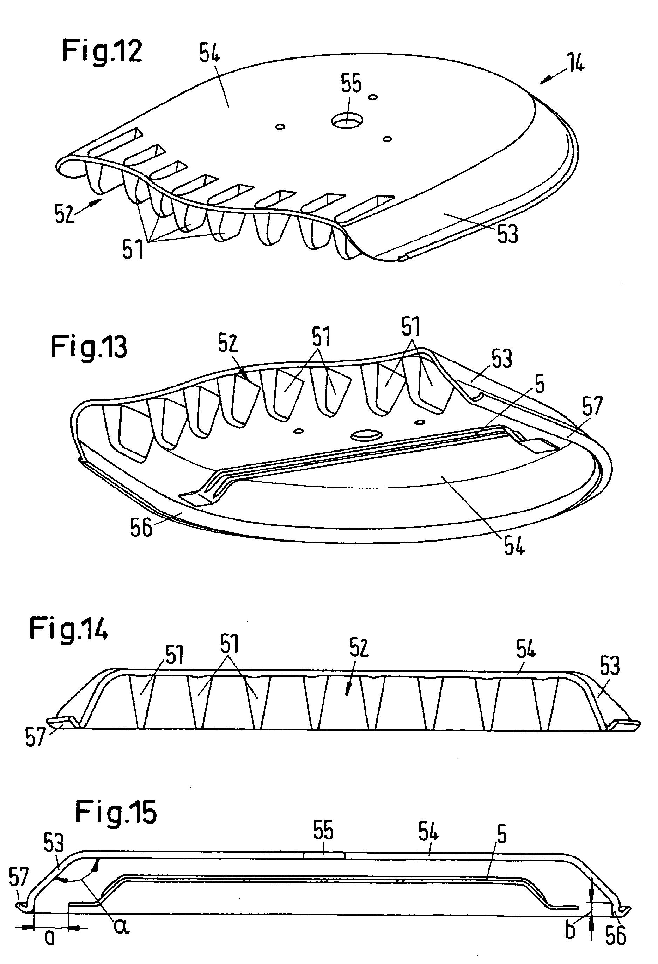

Die Figuren 12 bis 15 zeigen die Gestaltung des Mähdecks 14 im Einzelnen. Das Mähdeck 14 besitzt ein etwa senkrecht zur Drehachse 9 verlaufendes Dach 54 mit einer zentralen Öffnung 55 für die Antriebswelle 4. Benachbart zum Außenumfang des Messers 5 (Fig. 13) erstreckt sich eine Seitenwand 53. An der in Fahrtrichtung nach vorne weisenden Seite besitzt das Mähdeck 14 eine Eintrittsöffnung 52. In diesem Bereich ist die Seitenwand 43 ausgespart. In die Eintrittsöffnung 52 ragen eine Vielzahl von Rippen 51, die parallel zueinander ausgerichtet sind und sich etwa senkrecht aus der Ebene des Dachs 54 in die Eintrittsöffnung 52 erstrecken. Die Rippen 51 verhindern, dass Schnittgut oder mitgeführte Steine durch die Eintrittsöffnung 52 nach außen geschleudert werden können. Wie die Figuren 13 und 14 zeigen, besitzt die Seitenwand 53 einen nach außen und oben gebogenen Rand 57. In dem an den Rand 57 angrenzenden Bereich besitzt die Seitenwand 53 einen geraden Abschnitt 56, der sich etwa senkrecht zur Ebene des Dachs 54 erstreckt.

Wie Fig. 15 zeigt, schließt das Dach 54 mit der Seitenwand 53 einen Winkel α ein, der vorteilhaft mehr als 100°, insbesondere 125° bis 155° beträgt. Dadurch kann sich an der Seitenwand 53 kein Schnittgut oder Schmutz ansammeln. Schnittgut oder Schmutz, der gegen die Seitenwand 53 geschleudert wird, fällt aufgrund der Schwerkraft nach unten. Der gerade Abschnitt 56 der Seitenwand 53 besitzt eine Höhe b, die vorteilhaft mindestens 5 mm, insbesondere 5 mm bis 10 mm beträgt. Der gerade Abschnitt 56 verhindert ein Herausschleudern von Schnittgut oder Steinen oder dgl. aus dem Mähdeck 14 nach außen.

Das Messer 5 besitzt zur Seitenwand 53, insbesondere zum geraden Abschnitt 56 der Seitenwand 53 einen Abstand a, der vorteilhaft etwa 10 mm bis etwa 25 mm beträgt.

## Patentansprüche

1. Arbeitsgerät mit einem Gehäuse (2), mit einer am Gehäuse (2) verstellbar gehaltenen Baueinheit (60), wobei die Baueinheit (60) einen Antriebsmotor (3) und mindestens ein von dem Antriebsmotor (3) um eine erste Drehachse (9) rotierend angetriebenes Werkzeug umfasst, und mit einer Einstellvorrichtung zur Einstellung der Position der Baueinheit (60) gegenüber dem Gehäuse (2) in Längsrichtung der ersten Drehachse (9), wobei das Arbeitsgerät ein Bedienelement (10) besitzt, das zur Betätigung der Einstellvorrichtung um eine zweite Drehachse (28) drehbar ist, **wobei** die Einstellvorrichtung ein Stellelement (11) besitzt, das mit dem Bedienelement (10) über eine Getriebeverbindung (61) in Wirkverbindung steht, und **wobei** die Einstellvorrichtung eine Führungseinrichtung (62) besitzt, über die eine Drehbewegung des Stellelements (11) in eine Bewegung der Baueinheit (60) in Richtung der ersten Drehachse (9) umgewandelt wird,
**dadurch gekennzeichnet, dass das Bedienelement (10) eine unbetätigte Position (48) und eine Einstellposition (49) besitzt, wobei das Bedienelement (10) in der unbetätigten Position (48) mit dem Gehäuse (2) des Arbeitsgeräts drehfest verbunden ist und in der Einstellposition (49) gegenüber dem Gehäuse (2) drehbar ist, und dass das Bedienelement (10) in Richtung auf die unbetätigte Position (48) gefedert gelagert ist.**

2. Arbeitsgerät nach Anspruch **1**,
**dadurch gekennzeichnet, dass** das Bedienelement (10) aus der unbetätigten Position (48) in Längsrichtung der zweiten Drehachse (28) in die Einstellposition (49) verstellbar ist.

3. Arbeitsgerät nach Anspruch **1** oder **2**,
**dadurch gekennzeichnet, dass** zur drehfesten Verbindung des Bedienelements (10) mit dem Gehäuse (2) eine erste Verzahnung (59) vorgesehen ist, wobei ein erster Verzahnungspartner der ersten Verzahnung (59), insbesondere eine Außenverzahnung (17), mit dem Bedienelement (10) und ein zweiter Verzahnungspartner der ersten Verzahnung (59), insbesondere eine Innenverzahnung (18), mit dem Gehäuse (2) verbunden ist und wobei die beiden Verzahnungspartner in Einstellposition (49) des Bedienelements (10) außer Eingriff sind.

4. Arbeitsgerät nach einem der Ansprüche 1 bis **3**,
**dadurch gekennzeichnet, dass** das Bedienelement (10) drehfest mit einer Hülse (16) verbunden ist, die drehbar und in Längsrichtung der zweiten Drehachse (28) verschiebbar im Gehäuse (2) gelagert ist.

5. Arbeitsgerät nach Anspruch **4**,
**dadurch gekennzeichnet, dass** in der Hülse (16) eine Feder (25) angeordnet ist, die sich insbesondere mit einem Ende an einem Absatz (31) der Hülse (16) und mit dem anderen Ende am Gehäuse (2) abstützt.

6. Arbeitsgerät nach Anspruch 4 oder **5**,
**dadurch gekennzeichnet, dass** das Bedienelement (10) mit der Hülse (16) über eine lösbare Verbindung (50) verbunden ist, wobei die zum Lösen der Verbindung (50) benötigte Kraft vorteilhaft kleiner als die Gewichtskraft des Arbeitsgeräts ist.

7. Arbeitsgerät nach einem der Ansprüche 1 bis **6**,
**dadurch gekennzeichnet, dass** die Getriebeverbindung ein einstufiges Untersetzungsgetriebe ist.

8. Arbeitsgerät nach einem der Ansprüche 1 bis 97,
**dadurch gekennzeichnet, dass** das Bedienelement (10) drehfest mit einem Ritzel (12) verbunden ist, wobei das Ritzel (12) das Eingangszahnrad der Getriebeverbindung (61) bildet.

9. Arbeitsgerät nach einem der Ansprüche 1 bis **8**,
**dadurch gekennzeichnet, dass** das Stellelement (11) eine zweite Verzahnung (37) besitzt, die die Ausgangsverzahnung der Getriebeverbindung (61) bildet, wobei die zweite Verzahnung (37) mindestens einen Anschlag (38) besitzt, der eine Endstellung der Baueinheit (60) festlegt.

10. Arbeitsgerät nach einem der Ansprüche 1 bis **9**,
**dadurch gekennzeichnet, dass** die Führungseinrichtung (62) mindestens eine wendelförmig um die erste Drehachse (9) verlaufende Schrägführung (39, 40) umfasst.

11. Arbeitsgerät nach Anspruch **10**,
**dadurch gekennzeichnet, dass** die Baueinheit (60) über eine Linearführung (44) drehfest und in Längsrichtung der ersten Drehachse (9) beweglich gegenüber dem Gehäuse (2) des Arbeitsgeräts gehalten ist.

12. Arbeitsgerät nach Anspruch **11**,
**dadurch gekennzeichnet, dass** die Baueinheit (60) einen Aufnahmetopf (7) umfasst, in dem der Antriebsmotor (3) angeordnet ist, wobei der Aufnahmetopf (7) einen Teil der Linearführung (44) und mindestens eine erste Schrägführung (39) aufweist.

13. Arbeitsgerät nach Anspruch **12**,
**dadurch gekennzeichnet, dass** das Stellelement (11) einen ringförmigen Abschnitt (43) besitzt, der den Aufnahmetopf (7) umgibt und der mindestens eine zweite Schrägführung (40) besitzt, die mit der ersten Schrägführung (39) des Aufnahmetopfes (7) zusammenwirkt, wobei insbesondere drei erste Schrägführungen (39) und drei zweite Schrägführungen (40) vorgesehen sind, die gleichmäßig am Umfang des Aufnahmetopfes (7) verteilt angeordnet sind.

14. Arbeitsgerät nach einem der Ansprüche 1 bis **13**,
**dadurch gekennzeichnet, dass** die Baueinheit (60) ein Mähdeck (14) des Arbeitsgeräts umfasst, wobei das Mähdeck (14) das Werkzeug mindestens teilweise abdeckt.

## Claims

1. Working implement, comprising a housing (2), an assembly (60) adjustably held on the housing (2), the assembly (60) comprising a drive motor (3) and at least one tool driven by the drive motor (3) to rotate about a first axis of rotation (9), and an adjusting device for adjusting the position of the assembly (60) relative to the housing (2) in the longitudinal direction of the first axis of rotation (9), wherein the working element has a control (10) rotatable about a second axis of rotation (28) for operating the adjusting device, wherein the adjusting device has a control element (11) operatively connected to the control (10) via a geared connection (61), and wherein the adjusting device has a guide device (61), via which a rotary movement of the control element (11) is converted into a movement of the assembly (60) in the direction of the first axis of rotation (9),
**characterised in that** the control (10) has a non-actuated position (48) and an adjusting position (49), wherein the control (10) is non-rotatably connected to the housing (2) of the working implement in the non-actuated position (48) and rotatable relative to the housing (2) in the adjusting position (49), and **in that** the control (10) is resiliently mounted towards the non-actuated position (48).

2. Working implement according to claim 1,
**characterised in that** the control (10) is movable from the non-actuated position (48) into the adjusting position (49) in the longitudinal direction of the second axis of rotation (28).

3. Working implement according to claim 1 or 2,
**characterised in that** a first toothing (59) is provided for the non-rotatable connection between the control (10) and the housing (2), wherein a first toothing element of the first toothing (59), in particular an external toothing (17), is connected to the control (10) and a second toothing element of the first toothing (59), in particular an internal toothing (18), is connected to the housing (2), and wherein the two toothing elements are disengaged in the adjusting position (49) of the control (10).

4. Working implement according to any of claims 1 to 3,
**characterised in that** the control (10) is non-rotatably connected to a sleeve (16), which is rotatably mounted in the housing (2) and displaceable in the longitudinal direction of the second axis of rotation (28).

5. Working implement according to claim 4,
**characterised in that** a spring (25), which is in particular supported at one end on a shoulder (31) of the sleeve (16) and at the other end on the housing (2), is provided in the sleeve (16).

6. Working implement according to claim 4 or 5,
**characterised in that** the control (10) is connected to the sleeve (16) via a releasable connection (50), wherein the force required to release the connection (50) is advantageously less than the weight of the working implement.

7. Working implement according to any of claims 1 to 6,
**characterised in that** the geared connection is a single-stage reducing gear.

8. Working implement according to any of claims 1 to 7,
**characterised in that** the control (10) is non-rotatably connected to a pinion (12), the pinion (12) forming the input gear of the geared connection (61).

9. Working implement according to any of claims 1 to 8,
**characterised in that** the control element (11) has a second toothing (37), which forms the output toothing of the geared connection (61), the second toothing (37) having at least one stop (38) representing an end position of the assembly (60).

10. Working implement according to any of claims 1 to 9,
**characterised in that** the guide device (62) comprises at least one inclined guide (39, 40) extending helically about the first axis of rotation (9).

11. Working implement according to claim 10,
**characterised in that** the assembly (60) is held non-rotatably and movably relative to the housing (2) in the longitudinal direction of the first axis of rotation (9) via a linear guide (44).

12. Working implement according to claim 11,
**characterised in that** the assembly (60) comprises a location pot (7), in which the drive motor (3) is located, the location pot (7) comprising a part of the linear guide (44) and at least one first inclined guide (39).

13. Working implement according to claim 12,
**characterised in that** the control element (11) has an annular section (43), which surrounds the location pot (7) and comprises at least one second inclined guide (40) acting together with the first inclined guide (39) of the location pot (7), wherein three first inclined guides (39) and three second inclined guides (40) distributed evenly around the circumference of the location pot (7) are provided in particular.

14. Working implement according to any of claims 1 to 13,
**characterised in that** the assembly (60) comprises a mowing deck (14) of the working implement, the mowing deck (14) covering the tool at least partially.

## Revendications

1. Appareil de travail avec un carter (2), une unité de construction (60) retenue de manière réglable sur le carter (2), l'unité de construction (60) comprenant un moteur d'entraînement (3) et au moins un outil entraîné en rotation sur un premier axe de rotation (9) par le moteur d'entraînement (3), et un dispositif de réglage pour régler la position de l'unité de construction (60) par rapport au carter (2) dans le sens longitudinal du premier axe (9), l'appareil de travail comportant un élément de commande (10) qui est apte à tourner sur un second axe de rotation (28) en vue d'actionner le dispositif de réglage, le dispositif de réglage comportant un élément de positionnement (11) qui est en relation fonctionnelle avec l'élément de commande (10) par l'intermédiaire d'une liaison à engrenage (61), et le dispositif de réglage comportant un dispositif de guidage (62) par l'intermédiaire duquel un mouvement rotatif de l'élément de positionnement (11) est transformé en un déplacement de l'unité de construction (60) dans le sens du premier axe de rotation (9),
**caractérisé en ce que** l'élément de commande (10) présente une position non actionnée (48) et une position de réglage (49), l'élément de commande (10) étant relié fixe en rotation au carter (2) de l'appareil de travail, dans la position non actionnée, tandis que dans la position de réglage (49), il est apte à tourner par rapport au carter (2), et **en ce que** l'élément de commande (10) est monté à ressort en direction de la position non actionnée (48).

2. Appareil de travail selon la revendication 1,
**caractérisé en ce que** l'élément de commande (10) est apte à être déplacé dans le sens longitudinal du second axe de rotation (28), de la position non actionnée (48) jusqu'à la position de réglage (49).

3. Appareil de travail selon la revendication 1 ou 2,
**caractérisé en ce que** pour la liaison fixe en rotation de l'élément de commande (10) au carter (2), il est prévu une première denture (59), une première partie complémentaire de ladite première denture (59), en particulier une denture extérieure (17), étant reliée à l'élément de commande (10) tandis qu'une seconde partie complémentaire de la première denture (59), en particulier une denture intérieure (18), est reliée au carter (2), et les deux parties complémentaires de denture étant désolidarisées dans la position de réglage (49) de l'élément de commande (10).

4. Appareil de travail selon l'une des revendications 1 à 3,
**caractérisé en ce que** l'élément de commande (10) est relié fixe en rotation à un manchon (16) qui est monté en rotation et coulissant dans le sens longitudinal du second axe de rotation (28).

5. Appareil de travail selon la revendication 4,
**caractérisé en ce qu'**il est prévu dans le manchon (16) un ressort (25) qui s'appuie en particulier avec une extrémité sur un épaulement (31) du manchon (16), et avec l'autre extrémité sur le carter (2).

6. Appareil de travail selon la revendication 4 ou 5,
**caractérisé en ce que** l'élément de commande (10) est relié au manchon (16) par une liaison amovible (50), la force nécessaire pour supprimer la liaison (50) étant avantageusement plus faible que le poids de l'appareil de travail.

7. Appareil de travail selon l'une des revendications 1 à 6,
**caractérisé en ce que** la liaison à engrenage est une transmission à simple démultiplication.

8. Appareil de travail selon l'une des revendications 1 à 7,
**caractérisé en ce que** l'élément de commande (10) est relié fixe en rotation à un pignon (12), le pignon (12) formant la roue dentée d'entrée de la liaison à engrenage (61).

9. Appareil de travail selon l'une des revendications 1 à 8,
**caractérisé en ce que** l'élément de positionnement (11) comporte une seconde denture (37) qui forme la denture de sortie de la liaison à engrenage (61), la seconde denture (37) comportant une butée (38) qui fixe une position de fin de course de l'unité de construction (60).

10. Appareil de travail selon l'une des revendications 1 à 9,
**caractérisé en ce que** le dispositif de guidage (62) comprend au moins un guide incliné (39, 40) qui s'étend en spirale autour du premier axe de rotation (9).

11. Appareil de travail selon la revendication 10,
**caractérisé en ce que** l'unité de construction (60), par l'intermédiaire d'un guide linéaire (44), est maintenue fixe en rotation, et mobile dans le sens longitudinal du premier axe de rotation (9) par rapport au carter (2) de l'appareil de travail.

12. Appareil de travail selon la revendication 11,
**caractérisé en ce que** l'unité de construction (60) comprend un boîtier (7) dans lequel est disposé le moteur d'entraînement (3), le boîtier (7) comportant une partie du guide linéaire (44) et au moins un premier guide incliné (39).

13. Appareil de travail selon la revendication 12,
**caractérisé en ce que** l'élément de positionnement (11) comporte une section annulaire (43) qui entoure le boîtier (7) et qui comporte au moins un second guide incliné (40) coopérant avec le premier guide incliné (39) du boîtier (7), en particulier trois premiers guides inclinés (39) et trois seconds guides inclinés (40) répartis régulièrement sur la circonférence du boîtier (7) étant prévus.

14. Appareil de travail selon l'une des revendications 1 à 13,
**caractérisé en ce que** l'unité de construction (60) comprend un recouvrement de dispositif de coupe (14) de l'appareil de travail, le recouvrement de dispositif de coupe (14) couvrant au moins partiellement l'outil.
